# FASCICULE DE BREVET EUROPEEN

(11) **EP 2 548 206 B1**
(45) Date de publication et mention de la délivrance du brevet: **25.02.2015**
(21) Numéro de dépôt: 11715949.1
(22) Date de dépôt: 18.03.2011
(51) Int. Cl.: G21C 17/017, G21C 13/067, F16L 55/136, G21C 13/02, F22B 37/00

(54) **OBTURATEUR POUR CONDUIT DE FLUIDE, UTILISABLE PAR EXEMPLE DANS UNE CENTRALE NUCLEAIRE, NOTAMMENT POUR OBTURER UN DRAIN DE FOND D'UN GENERATEUR DE VAPEUR**
VERSTOPFUNGSVORRICHTUNG ZUM VERSTOPFEN EINER ROHRLEITUNG FÜR EINE FLÜSSIGKEIT, BEISPIELSWEISE ZUM EINSATZ IN EINER KERNREAKTORANLAGE, INSBESONDERE IN VERBINDUNG MIT EINER AN DER BODENSEITE EINES DAMPFERZEUGERS ANGEBRACHTEN ABFLUSSLEITUNG
BLOCKING DEVICE FOR A FLUID DUCT, E.G. FOR USE IN A NUCLEAR POWER PLANT, IN PARTICULAR FOR BLOCKING A STEAM GENERATOR BOTTOM DRAIN

(30) Priorité: 18.03.2010 FR 1051945
(43) Date de publication de la demande: 23.01.2013
(73) Titulaire: AREVA NP, 92400 Courbevoie (FR)
(72) Inventeur: KAPALA, Gilles, F-94880 Noiseau (FR); CHITTY, Walter-John, F-71100 Chalon Sur Saône (FR); VERNOT, Jean Philippe, F-71390 Marcilly Les Buxy (FR)
(74) Mandataire: Jacobson, Claude
(86) Numéro de dépôt international: PCT/FR2011/050565
(87) Numéro de publication internationale: WO 2011/114077

(56) Documents cités:
- EP-A2- 0 163 087
- WO-A1-96/17356
- FR-A1- 2 595 427
- FR-A1- 2 601 751
- FR-A1- 2 669 255
- US-A- 4 422 477
- US-A- 4 760 868

## Description

L'invention concerne en général les obturateurs pour conduits de fluides de réacteurs nucléaires, et plus précisément les obturateurs pour drains de boîtes à eau de générateurs de vapeur.

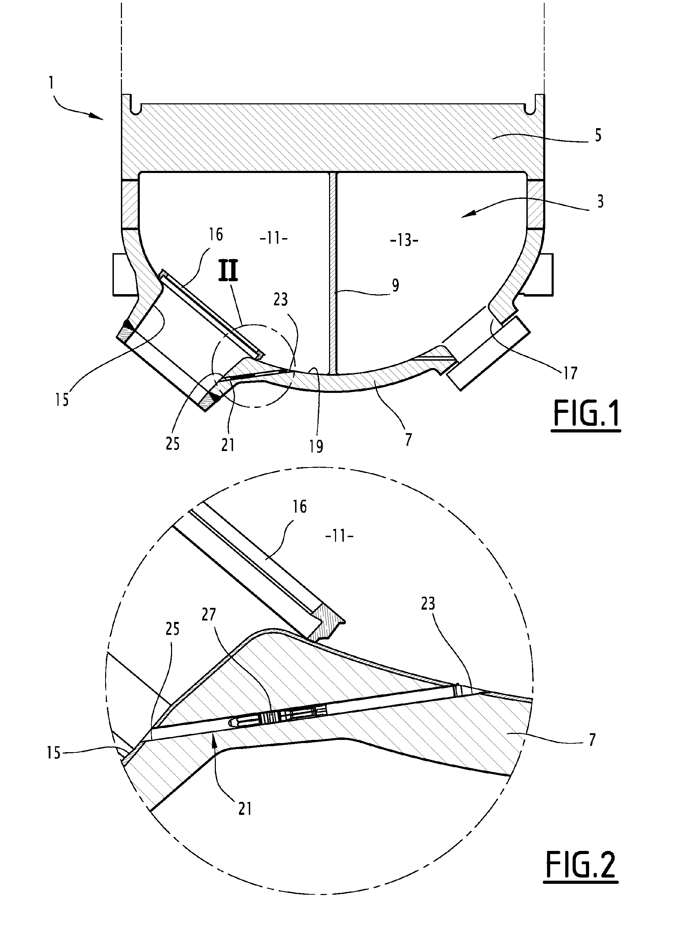

Comme visible sur la Figure 1, un générateur de vapeur 1 présente en partie inférieure un volume appelé « boîte à eau » 3. La boîte à eau 3 est délimitée vers le haut par la plaque tubulaire 5, et vers le bas par le fond inférieur 7 du générateur de vapeur. La boîte à eau 3 est divisée par une cloison intérieure 9 en deux volumes, un volume d'entrée 11 et un volume de sortie 13. L'eau du circuit primaire provenant de la cuve du réacteur pénètre dans le volume d'entrée 11 par une entrée 15 ménagée dans le fond inférieur 7. L'eau du circuit primaire, après avoir circulé dans le faisceau tubulaire du générateur de vapeur et cédé sa chaleur au fluide secondaire, pénètre dans le volume de sortie 13 et quitte celui-ci par une sortie non représentée. Le faisceau tubulaire n'est pas représenté sur la Figure 1. Chaque tube du faisceau présente une partie d'extrémité amont engagée à travers la plaque tubulaire 5 et débouchant dans le volume d'entrée 11, et une partie d'extrémité aval engagée à travers la plaque tubulaire 5 et débouchant dans le volume de sortie 13.

Par ailleurs, de manière à permettre des travaux de maintenance dans la boîte à eau 3, des trous d'homme 17 sont ménagés dans le fond inférieur 7 du générateur de vapeur. Un trou d'homme permet d'accéder au volume d'entrée 11, et un autre trou d'homme au volume de sortie 13. La cloison 9 sépare complètement le volume d'entrée 11 du volume de sortie 13.

En fonctionnement normal du générateur de vapeur, les trous d'homme 17 sont obturés et l'eau du circuit primaire circule de manière continue de la tubulure d'entrée 15 jusqu'à la tubulure de sortie (non représentée) du circuit primaire.

Périodiquement, il est nécessaire d'effectuer des opérations de maintenance dans la boîte à eau. Ces opérations visent par exemple à vérifier l'intégrité des tubes du faisceau tubulaire du générateur de vapeur, ou à obturer les tubes pouvant présenter une anomalie.

Pour réaliser de telles opérations de maintenance, le réacteur est d'abord mis à l'arrêt. Le couvercle de la cuve est retiré, de telle sorte que le circuit primaire communique avec la piscine réacteur.

Le générateur de vapeur est ensuite vidangé. Pour ce faire, le niveau de la piscine du réacteur est abaissé jusqu'à un niveau inférieur à celui du fond inférieur 7 du générateur de vapeur.

Comme visible sur la Figure 1, le point bas 19 du fond du générateur de vapeur est situé à un niveau inférieur au bord de l'entrée 15. La situation est la même pour la sortie.

De façon à permettre une vidange quasi-complète du fond du générateur de vapeur 7, des drains 21 sont ménagés dans le fond 7. Le drain 21, représenté sur les figures 1 et 2, est un conduit de petit diamètre, avec une entrée 23 débouchant à proximité du point bas 19, à l'intérieur de la boîte à eau, et une sortie 25 débouchant dans la tubulure d'entrée 15 du circuit primaire. Le drain 21 est légèrement penté, pour permettre la circulation gravitaire du liquide primaire depuis le point bas 19 jusque dans l'entrée de liquide primaire 15.

Le drain 21 permet, quand le niveau de la piscine réacteur est abaissé en vue de vidanger la boîte à eau 3, d'évacuer en quasi-totalité le liquide primaire hors de la boîte à eau, seule restant une toute petite quantité de liquide primaire, située à un niveau inférieur à l'entrée du drain 21.

Un drain similaire est ménagé à proximité de la tubulure de sortie.

Des tapes 16 sont ensuite posées sur l'entrée 15 et sur la sortie (non représentée) par des machines spécifiques avec un accès par le trou d'homme. De manière à ce que le liquide primaire ne pénètre pas dans la boîte à eau 3 quand le niveau d'eau dans la piscine réacteur est remonté, on dispose un obturateur 27 à l'intérieur du drain 21 pendant les opérations de maintenance.

Cet obturateur 27 est introduit dans le drain 21 par un opérateur, à partir de la boîte à eau 3. Il est ensuite possible de remonter le niveau d'eau de la piscine réacteur.

L'opération de mise en place de l'obturateur 27 dans le drain 21 est délicate, et l'obturateur doit être parfaitement fiable pour plusieurs raisons.

L'obturateur 27 doit être bloqué en position à l'intérieur du drain 21, de manière particulièrement fiable. En effet, après remontée du niveau d'eau dans la piscine réacteur, l'obturateur 21 est soumis à la pression du liquide primaire. S'il est éjecté, le liquide primaire peut s'écouler à travers le drain 21 jusque dans la boîte à eau 3, et de là à travers le trou d'homme 17 dans le bâtiment réacteur. Une telle fuite pourrait entraîner un retard considérable dans les opérations de maintenance et décalerait le redémarrage du réacteur nucléaire.

La mise en place de l'obturateur doit être aussi rapide que possible, pour limiter l'irradiation des opérateurs intervenant dans la boîte à eau.

L'obturateur doit pouvoir être retiré facilement, et ne pas se gripper une fois en place dans le drain.

Ainsi, il existe un besoin pour un dispositif permettant d'obturer et d'étancher un drain de vidange du fond de la boîte à eau d'un générateur de vapeur de manière suffisamment fiable pour supporter des surpressions dues à la remontée du niveau de l'eau dans la piscine réacteur.

A cette fin, l'invention porte sur un obturateur pour un conduit de composant de réacteur nucléaire, l'obturateur comprenant :
- une pluralité de bagues d'étanchéité élastiques, chacune expansible radialement par rapport à un axe central commun entre une position rétractée à distance d'une paroi du conduit et une position expansée de contact étanche avec la paroi du conduit ;
- un dispositif prévu pour sélectivement déplacer les bagues d'étanchéité entre leurs positions rétractées et leurs positions expansées ;
- au moins un organe de blocage en position de l'obturateur dans le conduit à obturer, distinct des bagues d'étanchéité, expansible radialement par rapport à l'axe central entre une position escamotée dans laquelle l'organe de blocage est écarté de la paroi du conduit et une position de blocage dans laquelle l'organe de blocage porte contre la paroi du conduit ;
- un dispositif prévu pour sélectivement déplacer l'organe de blocage entre sa position escamotée et sa position de blocage,
caractérisé en ce qu'il comprend un corps et une tige de commande déplaçable axialement par rapport au corps, la tige de commande étant agencée pour entraîner les bagues d'étanchéité entre leurs positions rétractées et expansées par l'intermédiaire du dispositif de déplacement des bagues d'étanchéité, et pour entraîner l'organe de blocage entre sa position escamotée et sa position de blocage par l'intermédiaire du dispositif de déplacement de l'organe de blocage, en ce que la tige de commande est déplaçable par coulissement par rapport au corps vers une position avant telle que les bagues d'étanchéité sont en position rétractées et l'organe de blocage en position escamotée, et en ce qu'il comprend au moins un organe de rappel élastique sollicitant à la fois les bagues d'étanchéité vers leurs positions expansées et l'organe de blocage vers sa position de blocage, de telle sorte qu'il suffit de relâcher la tige de commande pour que l'obturateur se bride à l'intérieur du conduit et que les bagues d'étanchéité créent une étanchéité entre l'obturateur et le conduit.

L'obturateur peut également présenter une ou plusieurs des caractéristiques ci-dessous, considérée individuellement ou selon toutes les combinaisons techniquement possibles :
- le dispositif de déplacement des bagues d'étanchéité comprend des premier et second éléments presseurs espacés longitudinalement l'un de l'autre et disposés de part et d'autre des bagues d'étanchéité, le premier élément presseur étant lié à la tige de commande et étant susceptible d'être déplacé vers le second élément presseur par la tige de commande ;
- le premier élément presseur est lié à la tige de commande par une liaison amovible ;
- l'organe de blocage est une pince cylindrique comportant à une première extrémité une pluralité de lames réparties circonférentiellement autour de l'axe central, chaque lame présentant en extrémité une surface externe cylindrique et une surface interne tronconique ;
- l'obturateur est destiné à être mise en place dans un conduit soumis à un champ de pression lié à un fluide à étancher dans le conduit et il comprend les éléments suivant disposés le long de la tige de commande:
   - une tête formant le premier élément presseur fixée à l'extrémité de la tige de commande et destinée à être orientée vers le champ de pression ;
   - les bagues d'étanchéité montées coulissantes sur la tige de commande entre le premier élément presseur et le second élément presseur ;
   - le second élément presseur, monté coulissant sur la tige de commande, formant le dispositif prévu pour sélectivement déplacer l'organe de blocage et comprenant une surface sphérique prévue pour s'engager sur chaque surface tronconique des extrémités des lames formant la première extrémité de la pince cylindrique sous l'effet du déplacement de la tige de commande par rapport au corps ;
   la surface interne de la première extrémité de la pince cylindrique étant de forme tronconique divergente vers le champ de pression, de sorte que lorsque l'obturateur est soumis audit champ de pression, la première extrémité de la pince s'ouvre pour brider l'obturateur à l'intérieur du conduit ;
- l'obturateur comprend à une extrémité axiale une bague prévue pour chasser une humidité ou des dépôts de matière de la paroi du conduit ; et
- l'obturateur comprend une pluralité de bagues anti-extrusion intercalées entre les bagues d'étanchéité, les bagues anti-extrusion étant prévues pour répartir une pression axiale entre les bagues d'étanchéité.

Selon un second aspect, l'invention porte sur un ensemble d'obturation comprenant un obturateur présentant les caractéristiques ci-dessus, et un outillage de préhension de l'obturateur, l'outillage de préhension comportant une tête de préhension de l'obturateur et un mécanisme de déplacement de la tige de commande de l'obturateur jusqu'à une position dans laquelle les bagues élastiques sont en position rétractée et l'organe de blocage en position escamotée.

L'ensemble peut également comporter une ou plusieurs des caractéristiques ci-dessous :
- l'outillage de préhension est susceptible d'adopter une première position dans laquelle la tête de préhension est rigidement fixée à l'obturateur, et une seconde position dans laquelle la tête de préhension est susceptible d'être séparée de l'obturateur, la tête de préhension bloquant la tige de commande de l'obturateur en position avant dans la première position, l'outillage de préhension comprenant en outre un organe de rappel sollicitant l'outillage de préhension vers la seconde position, et un organe de verrouillage amovible de l'outillage de préhension apte à verrouiller l'outillage de préhension dans la première position et à le déverrouiller dans la seconde position,
- l'outillage de préhension présente une forme allongée suivant une direction principale et est susceptible d'adopter une première position dans laquelle la tête de préhension est rigidement fixée à l'obturateur, la direction principale étant sensiblement perpendiculaire à l'axe central de l'obturateur dans ladite première position de l'outillage de préhension.

D'autres caractéristiques et avantages de l'invention ressortiront de la description détaillée qui en est donnée ci-dessous, à titre indicatif et nullement limitatif, en référence aux Figures annexées, parmi lesquelles :
- la Figure 1 est une vue en coupe axiale de la partie inférieure d'un générateur de vapeur;
- la Figure 2 est une vue en coupe, agrandie, d'un détail de la Figure 1, montrant le drain permettant de vidanger le fond de la boîte à eau du générateur de vapeur, et un obturateur conforme à l'invention engagé à l'intérieur du drain ;
- la Figure 3 est une vue en coupe longitudinale de l'obturateur de la Figure 2 ;
- la Figure 4 est une vue externe, de côté, de l'obturateur de la Figure 3 ;
- la Figure 5 est une vue similaire à celle de la Figure 3, montrant en plus l'outil de préhension de l'obturateur dans une position telle que les bagues d'étanchéité sont en position rétractée et les organes de blocage en position escamotée ; et
- la Figure 6 est une vue en coupe de l'outil de préhension de l'obturateur.

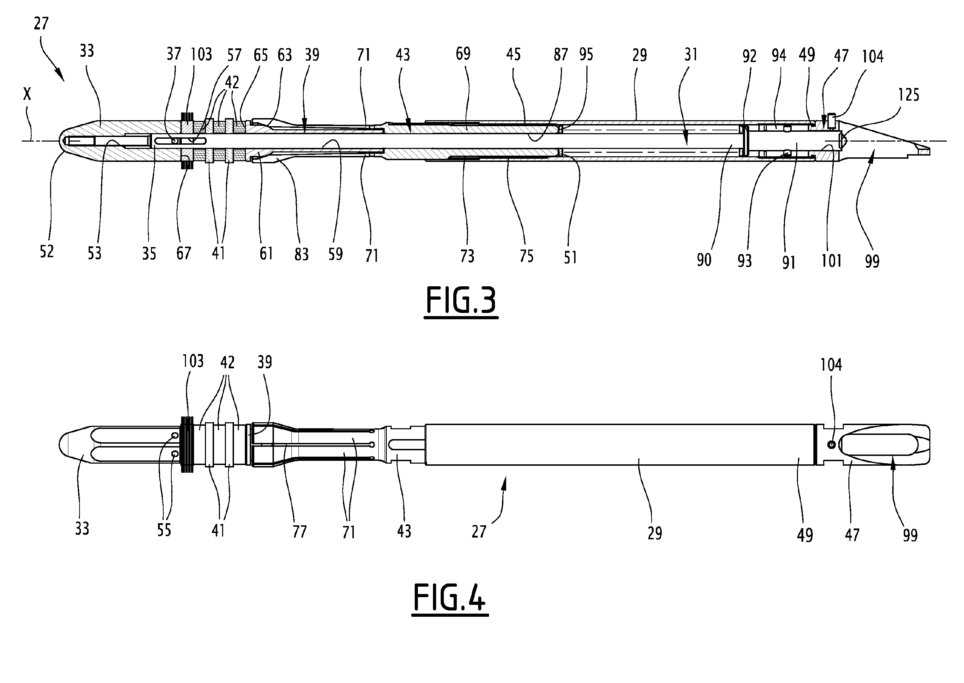

L'obturateur représenté sur la Figure 3 est plus particulièrement destiné à obturer un drain de fond de générateur de vapeur, tel que le drain 21 représenté sur la Figure 1 et décrit plus haut.

L'obturateur 27 comprend :
- un corps tubulaire 29, présentant un axe central X ;
- une tige de commande 31 s'étendant selon l'axe central X à l'intérieur du corps 29 ;
- une tête 33, liée à une extrémité axiale avant 35 de la tige de commande 31 par une goupille d'imperdabilité 37 ;
- un noyau expanseur 39, de forme générale tubulaire avec une portée sphérique, enfilé autour de la tige de commande 31 ;
- une pluralité de bagues d'étanchéité élastiques 41, intercalées avec des bagues anti-extrusion 42, également élastiques, ayant pour fonction de répartir la charge de compression des bagues d'étanchéité 41. Les bagues élastiques 41 et 42 sont enfilées autour de la tige de commande 31 et interposées axialement entre la tête 33 et le noyau expanseur 39 ;
- une pince cylindrique à expansion radiale 43 formant l'organe de blocage de l'obturateur à l'intérieur du drain, enfilée autour de la tige de commande 31 et solidaire d'une extrémité axiale avant 45 du corps tubulaire 29 ;
- un sabot 47, solidaire (par vissage ou soudage) d'une extrémité axiale arrière 49 du corps 29 ;
- une pluralité de rondelles élastiques 51 (type Belleville), disposées à l'intérieur du corps 29, et enfilées autour de la tige de commande 31. Seules deux rondelles élastiques 51, disposées aux extrémités avant et arrière de la pluralité de rondelles ont été représentées sur la Figure 3.

Dans la présente description, on utilise les termes « avant » et « arrière » comme signifiant respectivement tourné axialement vers la tête 33 de l'obturateur ou tourné axialement à l'opposé de la tête 33 de l'obturateur.

La tête 33 présente une zone avant convergente vers une pointe arrondie 52. Elle présente intérieurement un trou borgne taraudé 53, ouvert vers l'arrière. L'extrémité avant 35 de la tige de commande est engagée dans le trou borgne 53. Elle porte un filetage externe coopérant avec le taraudage du trou borgne 53.

Par ailleurs, la tête 33 comporte plusieurs orifices radiaux 55 (figure 4) traversant la tête 33 sur tout son diamètre et croisant le trou borgne 53. L'extrémité avant 35 de la tige de commande comporte une rainure traversante 57 d'orientation axiale. La goupille 37 est engagée dans l'un des orifices 55 et passe à travers la rainure 57. La goupille d'imperdabilité 37 solidarise en rotation, autour de l'axe X, la tige de commande 31 et la tête 33.

Le noyau expanseur 39 présente intérieurement un passage 59 de diamètre interne correspondant au diamètre externe de la tige de commande 31. Le noyau 39 présente à son extrémité avant une surépaisseur 61. La surépaisseur 61 est délimitée vers l'arrière par une surface sphérique 63 prévue pour provoquer l'expansion des lamelles de blocage de la pince cylindrique 43, comme expliqué plus loin.

La surépaisseur 61 est délimitée vers l'avant par une surface d'appui 65, de forme annulaire, sensiblement perpendiculaire à l'axe X.

La tête 33 est délimitée vers l'arrière par une seconde surface d'appui annulaire 67, elle aussi perpendiculaire à l'axe X. Les bagues élastiques 41 et 42 sont intercalées axialement entre les première et seconde surfaces d'appui 65 et 67.

L'organe de blocage 43 a la forme d'une pince cylindrique comportant un palier de guidage 69, et une pluralité de lames flexibles 71 s'étendant vers l'avant à partir du palier 69. Les lames 71 et le palier 69 sont préférentiellement réalisés en une seule pièce. En variante, les lames 71 de la pince cylindrique sont distinctes du palier 69 et sont fixées au palier 69 par tout moyen approprié tel que vissage ou soudage. Le palier de guidage 69 porte un filetage externe 73. Il est engagé dans l'extrémité avant 45 du corps 29. Cette extrémité avant comporte intérieurement un taraudage 75, adapté pour coopérer avec le filetage 73 du palier 69. L'organe de blocage 43 est ainsi fixé au corps 29. Par ailleurs, le filetage 73 et le taraudage 75 ont également pour fonction de régler la pré-contrainte des rondelles élastiques 51 comme on le verra plus loin.

Les lames 71 sont toutes identiques, et sont régulièrement réparties circonférentiellement autour de l'axe X. Par exemple, la pince cylindrique comporte six lames 71. Ces lames 71 sont séparées les unes des autres par des fentes 77 débouchantes vers l'avant et fermées vers l'arrière, c'est-à-dire du côté de la partie cylindrique.

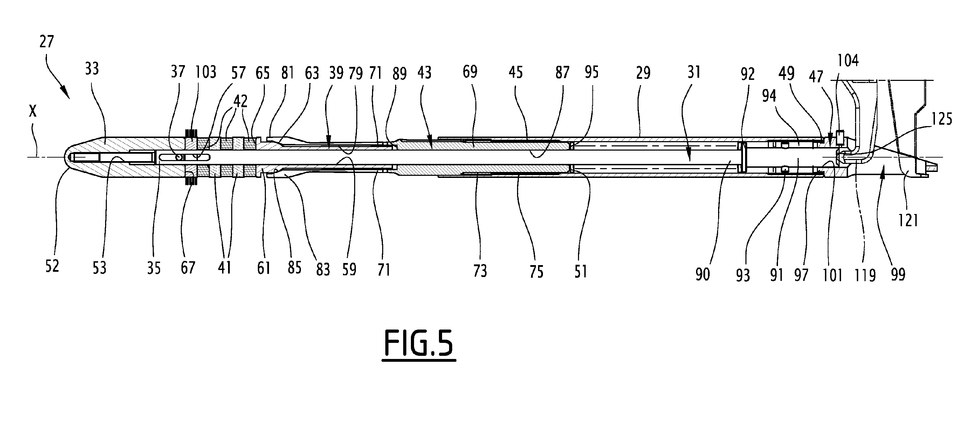

Les lames 71 délimitent ensemble un volume interne 79 (Figure 5) de forme sensiblement cylindrique. Le volume interne 79 est traversé axialement par la tige de commande 31. Le noyau expanseur 39 est engagé dans le volume interne 79, et est interposé radialement entre la tige de commande 31 et les lames 71. Le diamètre du volume interne 79 est légèrement supérieur au diamètre externe de la partie arrière du noyau 39.

Les extrémités libres avant 81 (Figure 5) des lames 71 comportent des surépaisseurs 83 dont les surfaces externes sont cylindriques de manière à venir s'appuyer sur la surface interne du drain en position de blocage. Par ailleurs, elles présentent des surfaces radialement intérieures 85 (Figure 5) définissant ensemble une forme sensiblement tronconique divergente d'arrière en avant. Les surfaces 85 sont prévues pour coopérer avec la surface sphérique 63 du noyau 39, en vue d'expanser radialement les lames 71 afin de brider l'obturateur dans le conduit.

Le palier de guidage 69 de l'organe de blocage délimite intérieurement un passage cylindrique 87, de diamètre intérieur correspondant au diamètre extérieur de la tige de commande 31. La tige de commande est engagée dans et traverse le passage 87. Un épaulement 89 (Figure 5) est ménagé entre le passage 87 de plus petit diamètre et le volume interne 79 de plus grand diamètre.

La tige de commande 31 est une tige cylindrique. Elle comporte un tronçon principal 90 de diamètre donné, et une partie d'extrémité arrière 91 de diamètre augmenté. Un épaulement 92 sépare les tronçons 90 et 91.

Les rondelles élastiques 51 sont des rondelles de type Belleville ou CRIBO^{®} (marque déposée de la société SUPRATEC), connu en soi. Elles sont enfilées autour du tronçon principal 90 de la tige de commande. Les rondelles 51 sont empilées les unes contre les autres, depuis l'extrémité arrière 95 du palier 69 jusqu'à l'épaulement 92. Les rondelles élastiques occupent tout l'espace entre l'extrémité arrière 95 du palier 69 et l'épaulement 92. Elles sont en appui à la fois sur l'extrémité arrière 95 et sur l'épaulement 92. Elles sollicitent la tige de commande 31 vers l'arrière. Elles sont calibrées pour exercer ensemble sur la tige 31 une sollicitation de force prédéterminée. On peut ajuster la pré-contrainte exercée par les rondelles 51 sur la tige 31 en modifiant le nombre de rondelles 51 enfilées autour de la tige ou en modifiant la disposition des rondelles (en opposition, en parallèle, deux rondelles parallèles suivies de deux rondelles en sens opposé, etc.). Le réglage final de la force exercée par les rondelles s'effectue grâce au système vis-écrou formé par le palier de guidage 69, muni de son filetage externe 73, lequel qui est vissé dans le taraudage interne 75 du corps tubulaire 29.

La tige de commande 31 s'étend selon l'axe central X. Elle traverse entièrement le corps 29, l'organe de blocage 43, le noyau expanseur 39, et les bagues élastiques 41, 42. Elle est solidaire de la tête 33. Elle est libre de coulisser par rapport aux bagues 41, 42, au noyau 39, à l'organe de blocage 43 et au corps 29.

Le sabot 47 est fixé à l'extrémité arrière 49 du corps 29. A cet effet, il comporte un tronçon cylindrique avant 97 (Figure 5), portant un filetage externe, coopérant avec un taraudage interne de l'extrémité arrière du corps 29. Le sabot 47 prolonge axialement le corps 29 vers l'arrière. Il comporte une lumière oblongue 99 pour l'engagement d'un outil de préhension de l'obturateur, et un orifice cylindrique 101 pour le passage de la tige de commande, mettant en communication l'intérieur de la lumière 99 avec l'intérieur du corps 29. Le tronçon cylindrique avant 97 du sabot comporte une rainure 94 dans laquelle est libre de coulisser une goupille 93, elle-même fixée à la tige 31 pour solidariser en rotation le sabot 27 et la tige 31. La lumière 99 traverse entièrement le sabot 47, suivant une direction sensiblement perpendiculaire à l'axe X. Elle est de forme allongée selon l'axe X. L'orifice cylindrique 101 s'étend axialement vers l'avant à partir de la lumière 99. Il traverse la partie filetée 97 du sabot et débouche à l'intérieur du corps 29. La tige de commande 31 est engagée par sa partie arrière 91 libre en coulissement dans l'orifice 101. Le diamètre interne de l'orifice 101 correspond sensiblement au diamètre externe du tronçon 91. L'extrémité arrière du tronçon 91 fait saillie hors de l'orifice 101, à l'intérieur de la lumière 99.

Par ailleurs, le sabot 47 porte un ergot radial 104, faisant saillie radialement par rapport au corps 29.

L'obturateur 27 comporte typiquement des bagues élastiques 41 et 42 de deux types différents, réalisées en élastomère de dureté et de diamètre différents. Les bagues du premier type 41 sont des bagues d'étanchéité en élastomère. Les bagues élastiques du second type 42 sont des bagues anti-extrusion dont la fonction est de répartir la charge de compression sur le train de bagues lorsqu'une pression est exercée sur la tête 33 de l'obturateur. Les bagues d'étanchéité 41 sont réalisées dans un matériau élastomère en matières différentes et de dureté plus faible que l'élastomère des bagues anti-extrusion 42 et le diamètre des bagues d'étanchéité 41 est légèrement supérieur à celui des bagues anti-extrusion 42. Les bagues des premier et second types alternent axialement le long de la tige de commande. Préférentiellement, des bagues anti-extrusion 42 se trouvent aux extrémités avant et arrière de l'empilement de bagues élastiques.

Par ailleurs, l'obturateur peut comporter une entretoise 103 équipée d'une brosse cylindrique, prévue pour chasser l'humidité et les dépôts de matière de la paroi du drain dans lequel l'obturateur doit être inséré. L'entretoise 103 est montée à l'avant des bagues élastiques 41, 42, et est par exemple interposée entre les bagues élastiques 41, 42 et la surface de pression 67 de la tête 33. Elle peut aussi être remplacée par un joint racleur.

L'obturateur est normalement dans un état d'obturation (expansion des bagues), représenté sur la Figure 3. Dans cet état, la tige de commande 31 est sollicitée par les rondelles élastiques 51 vers l'arrière, jusqu'à une position arrière. Lorsque l'obturateur est « à vide », c'est-à-dire qu'il ne se trouve pas inséré dans le drain 21, cette position arrière est définie par l'extrémité axiale arrière du noyau 39 venant en butée axialement contre l'épaulement 89 de l'organe de blocage. Lorsque l'obturateur est inséré dans le drain 21, un jeu résiduel persiste entre l'extrémité axiale arrière du noyau 39 et l'épaulement 89, le blocage dans le drain étant réalisé par l'appui des surfaces externes cylindriques des surépaisseurs 83 des lames flexibles 71 sur la paroi interne du drain. Dans cette position arrière, la tige de commande fait saillie sur une faible longueur axiale dans la lumière 99 du sabot.

La tête 33 est entraînée avec la tige de commande 31 et vient comprimer les bagues élastiques 41 et 42. Ces bagues élastiques sont prises entre les deux surfaces de pression 65 et 67, et comprimées axialement. Cette compression axiale provoque une expansion radialement des bagues élastiques, jusqu'à des positions expansées dans lesquelles les bagues d'étanchéité 41 sont en appui sur la paroi interne du drain 21.

Comme indiqué plus haut, la sollicitation axiale de la tige de commande 31 jusqu'à sa position arrière a également pour effet de décaler le noyau expanseur 39 vers l'arrière. De ce fait, la sphère 63 vient porter axialement contre les surfaces internes 85 des lames 71. Cette sollicitation axiale provoque une expansion radiale des lames 71 jusqu'à des positions de blocage respectives dans lesquelles les surfaces cylindriques externes des extrémités 83 des lames 71 viennent en appui sur la paroi interne du drain.

L'effort exercé par les rondelles 51 est réparti en un effort de compression des bagues élastiques 41, 42 et un effort d'expansion des lames 71. La répartition de l'effort est calibrée en jouant sur de nombreux facteurs, notamment sur le matériau et les dimensions des bagues élastiques 41 et 42, le matériau et les dimensions des lames 71, les profils de la sphère 63 et des surfaces coniques internes 85 des lames (par exemple en jouant sur l'angle du cône).

L'énergie de déformation transmise par les rondelles élastiques 51 aux bagues 41 et 42 et aux lames 71 doit être suffisante pour assurer les fonctions d'étanchéité et de blocage en position de l'obturateur, tout en étant suffisamment modérée pour que les lames 71 ne dégradent pas les surfaces du drain 21. Cette énergie doit correspondre également à la force maximale que peut délivrer un opérateur pour déplacer les bagues d'étanchéité et les organes de blocage par le biais de l'outil de préhension qui sera décrit plus loin.

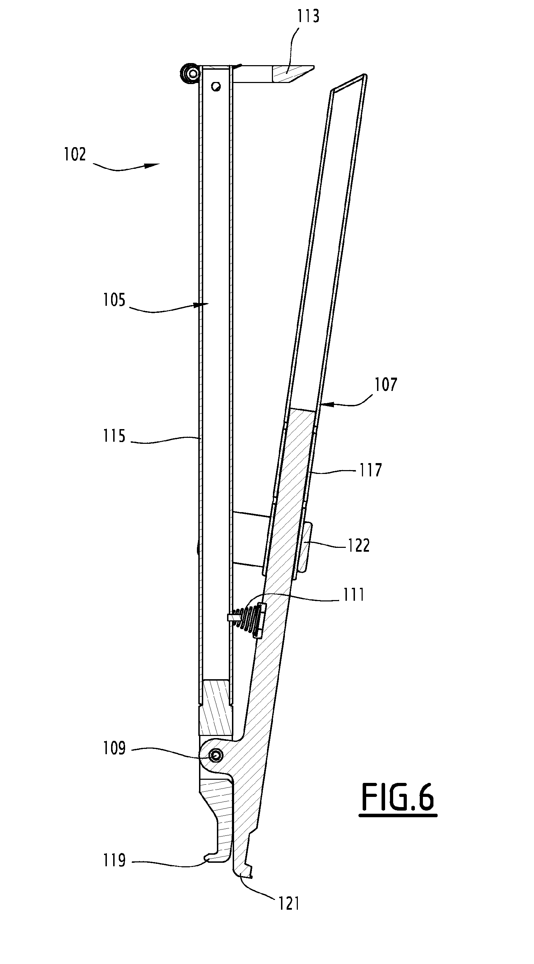

La tige de commande 31 est déplaçable axialement vers l'avant par rapport au corps 29, par exemple à laide de l'outil 102 illustré sur les Figures 5 et 6, jusqu'à une position avant illustrée sur la figure 5. Cet outil sera décrit plus loin. Le déplacement de la tige de commande 31 se fait par coulissement, à l'encontre de la force de rappel des rondelles élastiques 51. La tige de commande 31 entraîne la tête 33 vers l'avant ce qui a pour effet de réduire la compression axiale des bagues élastiques 41, 42 et de réduire la sollicitation axiale exercée par la sphère 63 sur les lames 71. De ce fait, les bagues élastiques 41, 42 reviennent à des positions rétractées, dans laquelle lesdites bagues ont chacune un diamètre respectif inférieur à leur diamètre en position expansée. Les lames 71 reviennent également élastiquement à des positions escamotées, dans lesquelles les lames sont moins écartées radialement de l'axe central de l'obturateur que dans leurs positions de blocage.

L'outil représenté sur la Figure 6, et partiellement sur la Figure 5, est destiné à la préhension, à la mise en place et au retrait de l'obturateur illustré sur les Figures 3 à 5.

Comme visible sur la Figure 6, cet outil 102 est une pince comportant des premier et second bras 105 et 107, une liaison pivot 109 entre les deux bras, un organe élastique de rappel 111 et un verrou 113. Chacun des bras 105, 107 comporte d'un côté supérieur de la liaison pivot un manche 115, 117, et d'un côté inférieur de la liaison pivot un crochet en L 119, 121. Les extrémités libres des crochets 119, 121 pointent selon des directions sensiblement opposées. Ces directions sont sensiblement perpendiculaires aux axes centraux respectifs des manches 115 et 117. L'axe de rotation de la liaison pivot 109 est sensiblement perpendiculaire au plan dans lequel s'inscrit les crochets 119 et 121. Les crochets 119 et 121 forment une tête de préhension de l'obturateur 27.

L'organe élastique 111 est interposé entre les manches 115 et 117 et sollicitent ceux-ci en rotation autour de la liaison pivot 109 dans le sens d'un écartement mutuel. Le verrou 113 est fixé par exemple à une extrémité supérieure du manche 115 et est prévu pour bloquer les manches 115 et 117 l'un contre l'autre, à l'encontre de la force de rappel de l'organe élastique 111. Le manche 115 porte encore un arceau 122 de guidage des bras.

Dans la position illustrée sur la Figure 6, les manches 115 et 117 sont écartés l'un de l'autre par l'organe élastique 111, et les crochets 119 et 121 sont dans une position rapprochée l'un de l'autre. Dans cette position, les crochets 119 et 121 sont susceptibles d'être introduits dans la lumière oblongue 99 du sabot de l'obturateur. Les extrémités pointant en sens opposé des deux crochets sont orientées sensiblement suivant l'axe central de l'obturateur. Il est alors possible de rapprocher les manches 115 et 117 l'un de l'autre en les faisant pivoter à l'encontre de la force de rappel de l'organe élastique 111. Comme illustré sur la Figure 5, l'extrémité du crochet en L 121 forme un épaulement qui vient se loger sous le bord périphérique de la lumière 99, à l'extrémité arrière de la lumière oblongue du sabot 47. L'extrémité du crochet 119 s'engage axialement dans l'orifice cylindrique 101 et déplace la tige de commande 31 vers sa position avant. Ceci a pour effet de placer les bagues élastiques 41, 42 dans leurs positions rétractées, et les lames 71 dans leurs positions escamotées.

Les interfaces entre l'outil 102 et l'obturateur 27 évitent le désengagement accidentel de ces deux composants. Ceci provient notamment de la géométrie des crochets 119, 121, et de la forme en cuvette de la surface 125 du tronçon d'extrémité 91 de la tige de commande. Cette surface 125 est tournée vers la lumière 99 et est prévue pour coopérer avec le crochet 119. L'outil est ainsi indexé et bloqué en position dans le sabot 99, par les deux crochets 119, 121 verrouillés aux deux extrémités opposées de la lumière 99. Ceci limite considérablement le risque de déchaussement de l'obturateur lors des phases de mise en place et de dépose.

Le verrou 113 permet de maintenir les manches 115 et 117 plaqués l'un contre l'autre.

Dans cette position « verrouillée de l'outil 102, un opérateur peut déplacer l'obturateur 27 à l'aide de l'outil de préhension 102. Il peut notamment de manière très commode introduire l'obturateur dans le drain 21, la tête 33 de l'obturateur pénétrant en premier dans le drain, par l'entrée 23 de celui-ci. L'ergot 104 vient porter contre le bord périphérique de l'entrée 23 du drain quand l'obturateur est entièrement engagé dans le drain 21. Il empêche l'obturateur de glisser le long du drain et de tomber dans l'entrée 15 de la tubulure du circuit primaire. Le diamètre externe de la tête 33, du corps 29, des bagues élastiques 41, 42 en positions rétractées, et des lames 71 en positions escamotées, est légèrement inférieur au diamètre interne du drain 21.

Comme visible sur la Figure 2, le sabot 47 épouse la forme de la surface intérieure du fond du générateur de vapeur une fois en place. Ceci permet de réduire considérablement les discontinuités géométriques, et ainsi d'éviter de gêner ou d'endommager les matériels ou de blesser les opérateurs intervenants dans les boîtes à eau lors des opérations de maintenance.

Une fois l'obturateur en place dans le drain, l'utilisateur déverrouille le verrou 113 et laisse les manches 115 et 117 s'écarter l'un de l'autre sous l'action de l'organe élastique 111. L'outil 102 se trouve alors en position « déverrouillée » dans laquelle l'utilisateur peut alors désengager les crochets 119 et 121 de la lumière 99.

Sous l'effet de l'action des rondelles élastiques 51, les bagues d'étanchéité 41 adoptent leurs positions expansées, dans lesquelles elles sont en contact étanche avec la paroi du drain. Par ailleurs, les lames 71 adoptent leurs positions de blocage et de bridage, dans laquelle elles portent contre la paroi du conduit et verrouillent l'obturateur en position.

Le retrait de l'obturateur se fait selon une procédure exactement inverse.

L'obturateur décrit ci-dessus présente de multiples avantages.

Du fait qu'il possède des organes de blocage en position de l'obturateur dans le conduit distinct des bagues d'étanchéité, le blocage en position de l'obturateur dans le drain est assuré de manière plus fiable. En effet, ce sont des organes différents qui assurent les deux fonctions, à savoir l'étanchéité et le blocage en position.

Les bagues d'étanchéité 41 et anti-extrusion 42 et les organes de blocage sont déplacés par une même tige de commande, ce qui permet une conception compacte de l'obturateur, adaptée à des conduits de faible diamètre. Le fait de faire passer les bagues élastiques de leurs positions rétractées à leurs positions expansées à l'aide d'éléments presseurs déplacés l'un vers l'autre par l'intermédiaire de la tige de commande permet également d'obtenir une structure simple et compacte pour l'obturateur.

Le fait que l'un des deux éléments presseurs (la tête 33) soit démontable, permet de remplacer facilement les bagues élastiques quand celles-ci sont usées.

L'utilisation de lames expansibles radialement permet de brider de manière efficace l'obturateur dans le drain. L'utilisation d'une surface sphérique appuyant sur une surface conique interne des lames pour expanser les lames permet de rendre l'obturateur simple mécaniquement et compact et sans risque de blocage.

Le fait que la tige de commande soit mobile par coulissement par rapport au corps fait que, en cas de pression élevée exercée par le liquide primaire sur la tête de l'obturateur, la pression avec laquelle les organes de blocage sont plaqués contre la paroi interne du drain est augmentée. Plus la pression du liquide primaire est élevée, plus l'effort de bridage de l'obturateur dans le drain est important ce qui permet d'accroitre les performances de maintient et d'éviter une éjection de l'obturateur lors de surpression accidentelle.

Le fait que l'obturateur comporte un organe de rappel élastique (rondelles 51) qui sollicite les bagues élastiques 41, 42 vers leur position expansée et l'organe de blocage vers sa position de blocage fait que la mise en place de l'obturateur est considérablement facilitée. En effet, comme expliqué ci-dessus, il suffit de relâcher la tige de commande pour que l'obturateur se bride à l'intérieur du drain et que les bagues élastiques créent une étanchéité entre l'obturateur et la paroi interne du drain. L'opérateur n'a pas à ajuster le couple de serrage à l'aide d'un outil. Les rondelles élastiques 51 sont calibrées de manière à obtenir automatiquement une pression adéquate des bagues élastiques et des organes de blocage contre la paroi interne du drain.

La mise en place de l'obturateur est donc facilitée, de telle sorte que les opérateurs peuvent rester moins longtemps à l'intérieur de la boîte à eau et les doses intégrées par ces opérateurs sont maintenues au minimum.

Les risques de grippage de l'obturateur à l'intérieur du drain sont également minimum, puisqu'il suffit de pousser la tige de commande pour déverrouiller l'obturateur. De plus, le contact « cône sur sphère » au niveau des lames de la pince cylindrique et du noyau expanseur empêche également à la pince cylindrique de se coincer en position de bridage.

L'utilisation d'un ergot porté par le sabot et empêchant ledit sabot de pénétrer entièrement dans le drain réduit considérablement le risque de perte de l'obturateur dans le circuit primaire.

Par ailleurs, comme visible sur la Figure 1, l'espace disponible entre l'entrée 23 du drain et la cloison interne 9 de la boîte à eau est réduit. L'utilisation d'organes de blocage distincts des bagues d'étanchéité permet de limiter l'encombrement axial de l'obturateur. Pour obtenir une même force de bridage de l'obturateur sur le conduit, uniquement avec des bagues élastiques, il serait nécessaire de disposer un grand nombre de bagues élastiques, ce qui augmenterait considérablement la longueur axiale de l'obturateur.

Par ailleurs, l'outillage de préhension 102 présente une forme allongée suivant une direction principale le long du manche 115, cette direction principale étant sensiblement perpendiculaire à l'axe central de l'obturateur 27 quand l'outillage de préhension 102 est en prise dans le sabot 47 de l'obturateur. Ceci facilite la manutention de l'obturateur 27 par les opérateurs, compte tenu de l'orientation du drain 21 et de l'espace limité disponible entre l'ouverture 23 du drain et la cloison intérieure 9 du fond inférieur 7 du générateur de vapeur.

L'obturateur s'adapte automatiquement aux irrégularités de diamètres du drain, résultant des tolérances de fabrication, de déformations en service, de dépôts, etc L'obturateur peut présenter de multiples variantes. L'effort élastique appliqué par les rondelles élastiques à la tige de commande comprime les bagues d'étanchéité et sollicite les organes de blocages jusqu'à ce que ceux-ci viennent automatiquement porter contre la paroi du drain. Aucune opération de réglage n'est nécessaire pour configurer l'obturateur en fonction du diamètre réel du drain.

L'obturateur peut comporter un nombre de bagues d'étanchéité quelconque, ces bagues pouvant être de toute nature et être constituées de tout matériau adapté.

Le dispositif prévu pour expanser les bagues d'étanchéité peut être de tout type adapté. Dans des variantes de réalisation non préférées, les bagues peuvent être expansées par des moyens pneumatiques ou par un système de came extérieure.

L'obturateur peut également comporter un ou plusieurs organes de blocage, ces organes de blocage étant de tout type adapté. L'organe de blocage peut ne pas comporter de lames expansibles radialement, mais comporter par exemple des patins de friction déplaçables radialement. Les lames peuvent pointer vers l'arrière et non vers l'avant. Dans ce cas, la sphère d'expansion est ménagée sur le corps et les lames sont solidaires du noyau.

L'organe de blocage et les bagues d'étanchéité peuvent être déplacés par des mécanismes entièrement séparés l'un de l'autre, ayant par exemple chacun une tige de commande qui lui est propre.

L'organe de blocage peut être placé à l'avant des bagues d'étanchéité, dans une variante de réalisation non préférée.

L'organe élastique pourrait ne pas être un empilement de rondelles Belleville, mais plutôt être un ressort hélicoïdal ou tout autre type d'organe élastique adapté. L'organe élastique pourrait ne pas être en appui sur l'extrémité arrière de l'organe de blocage mais plutôt sur une nervure interne du corps. Vers l'arrière, l'organe élastique pourrait être en appui sur un écrou vissé autour de la tige de commande, de manière à pouvoir ajuster la force de rappel de l'organe élastique.

La lumière oblongue 99 du sabot pourrait être remplacée par deux lumières séparées l'une de l'autre, prévues pour recevoir chacune l'un des deux crochets de l'outil de préhension.

Selon un second aspect indépendant du premier, l'invention pourrait porter sur un obturateur pour un conduit de réacteur nucléaire, l'obturateur comprenant :
- une pluralité de bagues d'étanchéité élastiques, chacune expansible radialement par rapport à un axe longitudinal commun entre une position rétractée à distance d'une paroi du conduit et une position expansée de contact étanche avec la paroi du conduit ;
- un dispositif prévu pour sélectivement déplacer les bagues d'étanchéité entre leurs positions rétractées et leurs positions expansées, le dispositif comportant au moins un organe de rappel élastique sollicitant les bagues élastiques vers leurs positions expansées.

L'obturateur a été décrit pour une application à un drain de fond de générateur de vapeur. Il pourrait être utilisé pour l'obturation d'autres conduits du réacteur nucléaire, pas nécessairement dans le générateur de vapeur, mais dans n'importe quelle autre partie du réacteur. Ces conduits peuvent faire partie du circuit primaire, du circuit secondaire, ou de tout autre circuit actif ou inactif.

Ce conduit peut être de tout diamètre.

En tout état de cause, l'obturateur décrit ci-dessus est particulièrement adapté à des situations où la mise en place de l'obturateur se fait dans un environnement irradiant.

## Revendications

1. Obturateur pour un conduit (21) d'un composant de réacteur nucléaire, l'obturateur (27) comprenant :
- une pluralité de bagues d'étanchéité (41) élastiques, chacune expansible radialement par rapport à un axe central commun entre une position rétractée à distance d'une paroi du conduit (21) et une position expansée de contact étanche avec la paroi du conduit (21);
- un dispositif prévu pour sélectivement déplacer les bagues d'étanchéité (41) entre leurs positions rétractées et leurs positions expansées ;
- au moins un organe (43) de blocage en position de l'obturateur (27) dans le conduit (21) à obturer, distinct des bagues d'étanchéité (41), expansible radialement par rapport à l'axe central entre une position escamotée dans laquelle l'organe de blocage (43) est écarté de la paroi du conduit (21) et une position de blocage dans laquelle l'organe de blocage porte contre la paroi du conduit (21) ;
- un dispositif prévu pour sélectivement déplacer l'organe de blocage (43) entre sa position escamotée et sa position de blocage,
- un obturateur (27) comprenant un corps (29) et une tige de commande (31), la tige de commande (31) étant agencée pour entraîner les bagues d'étanchéité (41) entre leurs positions rétractées et expansées par l'intermédiaire du dispositif de déplacement des bagues d'étanchéité (41), et pour entraîner l'organe de blocage (43) entre sa position escamotée et sa position de blocage par l'intermédiaire du dispositif de déplacement de l'organe de blocage (43),
**caractérisé en ce que** la tige de commande (31) est déplaçable axialement par coulissement par rapport au corps (29) vers une position avant telle que les bagues d'étanchéité (41) sont en position rétractées et l'organe de blocage (43) en position escamotée, et **en ce qu'**il comprend au moins un organe de rappel élastique (51) sollicitant à la fois les bagues d'étanchéité (41) vers leurs positions expansées et l'organe de blocage (43) vers sa position de blocage, de telle sorte qu'il suffit de relâcher la tige de commande (31) pour que l'obturateur se bride à l'intérieur du conduit (21) et que les bagues d'étanchéité (41) créent une étanchéité entre l'obturateur et le conduit (21).

2. Obturateur selon la revendication 1, **caractérisé en ce que** le dispositif de déplacement des bagues d'étanchéité (41) comprend des premier et second éléments presseurs (33, 39) espacés longitudinalement l'un de l'autre et disposés de part et d'autre des bagues d'étanchéité (41), le premier élément presseur (33) étant lié à la tige de commande (31) et étant susceptible d'être déplacé vers le second élément presseur (39) par la tige de commande (31).

3. Obturateur selon la revendication 2, **caractérisé en ce que** le premier élément presseur (33) est lié à la tige de commande (31) par une liaison amovible (37).

4. Obturateur selon la revendication 2 ou 3, **caractérisé en ce que** l'organe de blocage (43) est une pince cylindrique comportant à une première extrémité une pluralité de lames (71) réparties circonférentiellement autour de l'axe central, chaque lame présentant en extrémité (81) une surface externe cylindrique et une surface interne tronconique (85).

5. Obturateur selon la revendication 4, **caractérisé en ce qu'**il est destiné à être mise en place dans un conduit (21) soumis à un champ de pression lié à un fluide à étancher dans le conduit, l'obturateur comprenant les éléments suivant disposés le long de la tige de commande (31) :
- une tête (33) formant le premier élément presseur fixée à l'extrémité de la tige de commande et destinée à être orientée vers le champ de pression ;
- les bagues d'étanchéité (41) montées coulissantes sur la tige de commande (31) entre le premier élément presseur (33) et le second élément presseur (39) ;
- le second élément presseur, monté coulissant sur la tige de commande, formant le dispositif prévu pour sélectivement déplacer l'organe de blocage (43) et comprenant une surface sphérique (63) prévue pour s'engager sur chaque surface tronconique (85) des extrémités des lames (71) formant la première extrémité de la pince cylindrique sous l'effet du déplacement de la tige de commande (31) par rapport au corps (29) ;
la surface interne (85) de la première extrémité de la pince cylindrique étant de forme tronconique divergente vers le champ de pression, de sorte que lorsque l'obturateur est soumis audit champ de pression, la première extrémité de la pince s'ouvre pour brider l'obturateur à l'intérieur du conduit (21).

6. Obturateur selon l'une quelconque des revendications précédentes, **caractérisé en ce qu'**il comprend à une extrémité axiale une bague (103) prévue pour chasser une humidité ou des dépôts de matière de la paroi du conduit.

7. Obturateur selon l'une quelconque des revendications 1 à 6, **caractérisé en ce qu'**il comprend une pluralité de bagues anti-extrusion (42) intercalées entre les bagues d'étanchéité (41), les bagues anti-extrusion (42) étant prévues pour répartir une pression axiale entre les bagues d'étanchéité (41).

8. Obturateur selon l'une quelconque des revendications précédentes, **caractérisé en ce que** le corps (29) est tubulaire et présente un axe central (X), la tige de commande (31) s'étendant selon l'axe central ((X) à l'intérieur du corps (29).

9. Ensemble d'obturation comprenant un obturateur (27) selon l'une quelconque des revendications précédentes et un outillage (102) de préhension de l'obturateur (27), l'outillage de préhension (102) comportant une tête de préhension (119, 121) de l'obturateur (27) et un mécanisme de déplacement de la tige de commande (31) jusqu'à une position dans laquelle les bagues d'étanchéité (41) sont en position rétractée et l'organe de blocage (43) en position escamotée.

10. Ensemble selon la revendication 9, **caractérisé en ce que** l'outillage de préhension (102) est susceptible d'adopter une première position dans laquelle la tête de préhension (119, 121) est rigidement fixée à l'obturateur (27), et une seconde position dans laquelle la tête de préhension est susceptible d'être séparée de l'obturateur (27), la tête de préhension (119, 121) bloquant la tige de commande (31) de l'obturateur (27) en position avant dans la première position, l'outillage de préhension (102) comprenant en outre :
- un organe de rappel (111) sollicitant l'outillage de préhension (102) vers la seconde position, et
- un organe (113) de verrouillage amovible de l'outillage de préhension (102) apte à verrouiller l'outillage de préhension dans la première position et à le déverrouiller dans la seconde position.

11. Ensemble selon la revendication 9 ou 10, **caractérisé en ce que** l'outillage de préhension (102) présente une forme allongée suivant une direction principale et est susceptible d'adopter une première position dans laquelle la tête de préhension (119, 121) est rigidement fixée à l'obturateur (27), la direction principale étant sensiblement perpendiculaire à l'axe central de l'obturateur (27) dans ladite première position de l'outillage de préhension (102).

## Patentansprüche

1. Verschlusselement für eine Leitung (21) eines Bauelements eines Kernreaktors, wobei das Verschlusselement (27) aufweist:
- eine Mehrzahl von elastischen Dichtungsringen (41), von denen jeder radial expandierbar ist bezüglich einer gemeinsamen zentralen Achse zwischen einer Kontraktionsposition im Abstand zu einer Leitungswand (21) und einer Expansionsposition eines Abdichtungskontakts mit der Leitungswand (21),
- eine Vorrichtung, die vorgesehen ist zum selektiven Deplatzieren der Dichtungsringe (41) zwischen deren Kontraktionspositionen und deren Expansionspositionen,
- wenigstens ein Organ (43) zum Blockieren in Position des Verschlusselements (27) in der zu verschließenden Leitung (21), das verschieden ist von den Dichtungsringen (41) und das radial expandierbar ist bezüglich der zentralen Achse zwischen einer Einfahrposition, in welcher das Organ zum Blockieren (43) von der Leitungswand (21) eingefahren ist, und einer Blockierposition, in welcher das Organ zum Blockieren gegen die Leitungswand (21) gebracht ist,
- eine Vorrichtung, die vorgesehen ist zum selektiven Deplatzieren des Organs zum Blockieren (43) zwischen dessen Einfahrposition und dessen Blockierposition,
- ein Verschlusselement (27) mit einem Körper (29) und einer Steuerstange (31), wobei die Steuerstange (31) angeordnet ist zum Antreiben der Dichtungsringe (41) zwischen deren Kontraktions- und Expansionspositionen mittels der Zwischenschaltung der Vorrichtung zum Deplatzieren der Dichtungsringe (41) und zum Antreiben des Organs zum Blockieren (43) zwischen dessen Ausfahrposition und dessen Blockierposition mittels der Zwischenschaltung der Vorrichtung zum Deplatzieren des Organs zum Blockieren (43),
- **dadurch gekennzeichnet, dass** die Steuerstange (31) axial verschiebe-deplatzierbar ist bezüglich des Körpers (29) zu einer Vorderposition hin, sodass die Dichtungsringe (41) in Kontraktionsposition sind und das Organ zum Blockieren (43) in Einfahrposition ist, und dass es wenigstens ein elastisches Rückstellelement (51) aufweist, das die Dichtungsringe (41) gleichzeitig zu deren Expansionspositionen und das Organ zum Blockieren (43) zu dessen Blockierposition hin vorspannt, derart, dass es ausreicht, die Steuerstange (31) loszulassen, damit das Verschlusselement sich an das Innere der Leitung (21) anlegt und damit die Dichtungsringe (41) eine Abdichtung zwischen dem Verschlusselement und der Leitung (21) erzeugen.

2. Verschlusselement gemäß Anspruch 1, **dadurch gekennzeichnet, dass** die Vorrichtung zum Deplatzieren der Dichtungsringe (41) aufweiset ein erstes und ein zweites Drückelement (33, 39), die längs im Abstand voneinander sind und die beiderseits der Dichtungsringe (41) angeordnet sind, wobei das erste Drückelement (33) mit der Steuerstange verbunden ist und in der Lage ist, zu dem zweiten Drückelement (39) hin deplatziert zu werden mittels der Steuerstange (31).

3. Verschlusselement gemäß Anspruch 2, **dadurch gekennzeichnet, dass** das erste Drückelement (33) mit der Steuerstange (31) verbunden ist mittels einer lösbaren Verbindung (37).

4. Verschlusselement gemäß Anspruch 2 oder 3, **dadurch gekennzeichnet, dass** das Organ zum Blockieren (43) eine zylindrische Zange ist, die an einem ersten Ende eine Mehrzahl von Backen (71) aufweist, die umfänglich um die zentrale Achse herum verteilt sind, wobei jede Backe an einem Ende (81) eine zylindrische externe Fläche und eine konische interne Fläche (85) hat.

5. Verschlusselement gemäß Anspruch 4, **dadurch gekennzeichnet, dass** es vorgesehen ist, um in einer Leitung (21) platziert zu werden, die einem Druckfeld unterworfen ist, das mit einem Fluid zusammenhängt, das in der Leitung abzudichten ist, wobei das Verschlusselement die nachfolgenden Elemente entlang der Steuerstange (31) angeordnet aufweist:
- einen Kopf (33), der das erste Drückelement bildet, der an dem Ende der Steuerstange befestigt ist und der dazu bestimmt ist, um zu dem Druckfeld hin gewandt zu sein,
- die Dichtungsringe (41), die verschiebbar auf der Steuerstange (31) zwischen dem ersten Drückelement (33) und dem zweiten Drückelement (39) montiert sind,
- das zweite Drückelement, das verschiebbar auf der Steuerstange montiert ist, das die Vorrichtung bildet, die vorgesehen ist zum selektiven Deplatzieren des Organs zum Blockieren (43), und das eine sphärische Fläche (63) aufweist, die vorgesehen ist zum Eingriff mit jeder konischen Fläche (85) der Enden der Backen (7), die das erste Ende der zylindrischen Zange bilden, unter dem Effekt des Deplatzierens der Steuerstange (31) bezüglich des Körpers (29),
wobei die interne Fläche (85) des ersten Endes der zylindrischen Zange von zu dem Druckfeld hin divergierender konischer Form ist, derart, dass, wenn das Verschlusselement dem besagten Druckfeld unterworfen ist, das erste Ende der Zange sich öffnet, um das Verschlusselement an das Innere der Leitung (21) anzulegen.

6. Verschlusselement gemäß einem der vorhergehenden Ansprüche, **dadurch gekennzeichnet, dass** es an einem axialen Ende einen Ring (103) aufweist, der vorgesehen ist zum Verdrängen einer Feuchte oder von Stoffablagerungen von der Leitungswand.

7. Verschlusselement gemäß einem der Ansprüche 1 bis 6, **dadurch gekennzeichnet, dass** es eine Mehrzahl von Anti-Extrusion-Ringen (42) aufweist, die zwischen den Dichtungsringen (41) zwischeneingefügt sind, wobei die Anti-Extrusion-Ringe (42) vorgesehen sind zum Verteilen eines axialen Drucks zwischen den Dichtungsringen (41).

8. Verschlusselement gemäß einem der vorhergehenden Ansprüche, **dadurch gekennzeichnet, dass** der Körper (29) rohrförmig ist und eine zentrale Achse (X) hat, wobei die Steuerstange (31) sich entlang der zentralen Achse (X) im Inneren des Körpers (29) erstreckt.

9. Verschluss-Ensemble mit einem Verschlusselement (27) gemäß einem der der vorhergehenden Ansprüche und einem Werkzeug (102) zum Greifen des Verschlusselements (27), wobei das Werkzeug zum Greifen (102) aufweist einen Kopf zum Greifen (119, 121) des Verschlusselements (27) und einen Mechanismus zum Deplatzieren der Steuerstange (31) bis in eine Position, in welcher die Dichtungsringe (41) in Kontraktionsposition sind und das Organ zum Blockieren (43) in Einfahrposition ist.

10. Ensemble gemäß Anspruch 9, **dadurch gekennzeichnet, dass** das Werkzeug zum Greifen (102) in der Lage ist, eine erste Position, in welcher der Kopf zum Greifen (119, 121) starr an dem Verschlusselement (27) befestigt ist, und eine zweite Position einzunehmen, in welcher der Kopf zum Greifen in der Lage ist, von dem Verschlusselement (27) separiert zu werden, wobei der Kopf zum Greifen (119, 121) in der ersten Position die Steuerstange (31) des Verschlusselements (27) in Vorderposition blockiert, wobei das Werkzeug zum Greifen (102) ferner aufweist:
- ein Rückstellorgan (111), das das Werkzeug zum Greifen (102) zu der zweiten Position hin vorspannt, und
- ein Organ (113) zum lösbaren Verriegeln des Werkzeugs zum Greifen (102), das geeignet ist, um das Werkzeug zum Greifen in der ersten Position zu verriegeln und um es in der zweiten Position zu entriegeln.

11. Ensemble gemäß Anspruch 9 oder 10, **dadurch gekennzeichnet, dass** das Werkzeug zum Greifen (102) eine langgestreckte Form hat, folgend einer Hauptrichtung, und in der Lage ist, eine erste Position einzunehmen, in welcher der Kopf zum Greifen (119, 121) starr an dem Verschlusselement (27) befestigt ist, wobei die Hauptrichtung im Wesentlichen senkrecht ist zur zentralen Achse des Verschlusselements (27) in der besagten ersten Position des Werkzeugs zum Greifen (102).

## Claims

1. A shut-off device for a duct (21) of a nuclear reactor component, the shut-off device (27) comprising:
- a plurality of elastic sealing rings (41), each radially expandable relatively to a common central axis between a retracted position at a distance from a wall of the duct (21) and an expanded position for leaktight contact with the wall of the duct (21);
- a device provided for selectively displacing the sealing rings (41) between their retracted positions and their expanded positions;
- at least one member (43) for locking into position the shut-off device (27) in the duct (21) to be shut off, distinct from the sealing rings (41), radially expandable relatively to the central axis between a retracted position in which the locking member (43) is located away from the wall of the duct (21) and a locking position in which the locking member bears against the wall of the duct (21);
- a device provided for selectively displacing the locking member (43) between its retracted position and its locking position,
the shut-off device (27) comprising a body (29) and a control rod (31), the control rod (31) being laid out so as to drive the sealing rings (41) between their retracted and expanded positions via the device for displacing the sealing rings (41), and for driving the locking member (43) between its retracted position and its locking position via the device for displacing the locking member (43),
**characterized in that** the control rod (31) is axially displaceable by sliding relatively to the body (29) towards a front position such that the sealing rings (41) are in a retracted position and the locking member (43) is in a retracted position, and **in that** it comprises at least one elastic return member (51) urging both the sealing rings (41) towards their expanded positions and the locking member (43) towards its locking position, so that it is sufficient to release the control rod (31) so that the shut off device clamps inside the duct (21) and the sealing rings (41) create a seal between the shut-off device and the duct (21).

2. The shut-off device according to claim 1, **characterized in that** the device for displacing the sealing rings (41) comprises first and second pressing elements (33, 39) longitudinally spaced apart from each other and positioned on either side of the sealing rings (41), the first pressing element (33) being bound to the control rod (31) and being able to displaced towards the second pressing element (39) by the control rod (31).

3. The shut-off device according to claim 2, **characterized in that** the first pressing element (33) is bound to the control rod (31) through a removable link (37).

4. The shut-off device according to claim 2 or 3, **characterized in that** the locking member (43) is a cylindrical clamp including at a first end a plurality of blades (71) circumferentially distributed around the central axis, each blade having at one end (81) a cylindrical external surface and a frusto-conical internal surface (85).

5. The shut-off device according to claim 4, **characterized in that** it is intended to be placed in a duct (21) subject to a pressure field related to fluid to be sealed in the duct, the shut-off device comprising the following elements positioned along the control rod (31):
- a head (33) forming the first pressing element attached to the end of the control rod and intended to be oriented towards the pressure field;
- the sealing rings (41) slideably mounted on the control rod (31) between the first pressing element (33) and the second pressing element (39);
- the second pressing element slideably mounted on the control rod, forming the device provided for selectively displacing the locking member (43) and comprising a spherical surface (63) provided for engaging onto each frusto-conical surface (85) of the ends of the blade (71) forming the first end of the cylindrical clamp under the effect of the displacement of the control rod (31) relatively to the body (29);
the internal surface (85) of the first end of the cylindrical clamp being of a frusto-conical shape diverging towards the pressure field, so that when the shut-off device is subject to said pressure field, the first end of the clamp opens in order to clamp the shut-off device inside the duct (21).

6. The shut-off device according to any of the preceding claims, **characterized in that** it comprises at an axial end a ring (103) provided for driving out the humidity or material deposits from the wall of the duct.

7. The shut-off device according to any of claims 1 to 6, **characterized in that** it comprises a plurality of anti-extrusion rings (42) inserted between the sealing rings (41), the anti-extrusion rings (42) being provided for distributing axial pressure among the sealing rings (41).

8. The shut-off device according to any of the preceding claims, **characterized in that** the body (29) is tubular and has a central axis (X), the control rod (31) extending along the central axis (X) inside the body (29).

9. A shut-off device assembly comprising a shut-off device (27) according to any of the preceding claims and tooling (102) for grasping the shut-off device (27), the grasping tooling (102) including a head (119, 121) for grasping the shut-off device (27) and a mechanism for displacing the control rod (31) as far as a position in which the sealing rings (41) are in a retracted position and the locking member (43) in a retracted position.

10. The assembly according to claim 9, **characterized in that** the grasping tooling (102) may adopt a first position in which the grasping head (119, 121) is rigidly attached to the shut-off device (27), and a second position in which the grasping head may be separated from the shut-off device (27), the grasping head (119, 121) locking the control rod (31) of the shut-off device (27) in a front position in the first position, the grasping tooling (102) further comprising:
- a return member (111) urging the grasping tooling (102) towards the second position, and
- a removable member (113) for locking the grasping tooling (102) able to lock the grasping tooling in the first position and to unlock it in the second position.

11. The assembly according to claim 9 or 10, **characterized in that** the grasping tooling (102) has an elongated shape along a main direction and may adopt a first position in which the grasping head (119, 121) is rigidly attached to the shut-off device (27), the main direction being substantially perpendicular to the central axis of the shut-off device
